# EUROPEAN PATENT APPLICATION

(11) **EP 3 711 856 A1**
(43) Date of publication of application: **23.09.2020**
(21) Application number: 20162052.3
(22) Date of filing: 10.03.2020
(51) Int. Cl.: B01L 3/02, G01N 35/10

(54) **SPECIMEN MEASUREMENT DEVICE, SPECIMEN MEASUREMENT METHOD, AND NOZZLE**

(30) Priority: 22.03.2019 JP 2019055634
(71) Applicant: SYSMEX CORPORATION, Kobe-shi Hyogo 651-0073 (JP)
(72) Inventor: Kuze, Masato, Hyogo, 651-0073 (JP); Shiba, Masaki, Hyogo, 651-0073 (JP); Inoue, Taku, Hyogo, 651-0073 (JP)
(74) Representative: Hoffmann Eitle

(57) **Abstract**

Disclosed is a specimen measurement device including: a nozzle having an area on a distal end side being covered by a hydrophobic coating; a measurement unit that measures a specimen dispensed into a container by the nozzle; and a drive unit that moves the nozzle so as to abut on a bottom surface of the container, in which the nozzle having a distal end surface on a discharge port side being exposed from the hydrophobic coating.

## Description

### TECHNICAL FIELD

The present invention relates to a specimen measurement device, a specimen measurement method, and a nozzle.

### BACKGROUND

Conventionally, a specimen measurement device is known (for example, see JP2007-085930).

JP 2007-085930 discloses an analysis device (specimen measurement device) 900 including a sample dispensing probe (nozzle) 901 to dispense a sample (specimen) into a container, as illustrated in FIG. 16. In the analysis device 900 of JP 2007-085930, the sample dispensing probe 901 is cleaned with an aqueous solution containing reactive oxygen species each time a sample is dispensed so as to be used in common for different samples. In the sample dispensing probe 901, a hydrophobic treatment film 903 is formed on the surface of a metal probe 902 in order to suppress oxidation by the aqueous solution containing reactive oxygen species during cleaning.

Conventionally, as described in JP 2513478 Y2, there is known a technique of discharging a sample in a state where a distal end of a nozzle is pressed against a bottom surface of a container in order to accurately dispense a small amount of the sample.

However, when discharging a sample in the state where a distal end of the sample dispensing probe is pressed against the bottom surface of the container as in JP 2513478 Y2 using a common sample dispensing probe for different samples as in JP2007-085930, the sample dispensing probe and the bottom surface of the container come into contact with each other, and thus, there is a case where the hydrophobic treatment film of the sample dispensing probe is peeled off. When the hydrophobic treatment film of the sample dispensing probe is peeled off, peeled pieces of the hydrophobic treatment film are mixed into the sample, and thus, there is a disadvantage that it is difficult to measure the sample with high accuracy. When the common sample dispensing probe is used for different samples, it is necessary to clean the sample dispensing probe each time a sample is dispensed, and thus, there is a disadvantage that the sample dispensing probe is easily oxidized when the hydrophobic treatment film is not formed. As a result, there is a problem that it is difficult to measure the sample (specimen) with high accuracy while preventing the oxidation of the sample dispensing probe (nozzle).

### SUMMARY OF THE INVENTION

The scope of the present invention is defined solely by the appended claims, and is not affected to any degree by the statements within this summary.

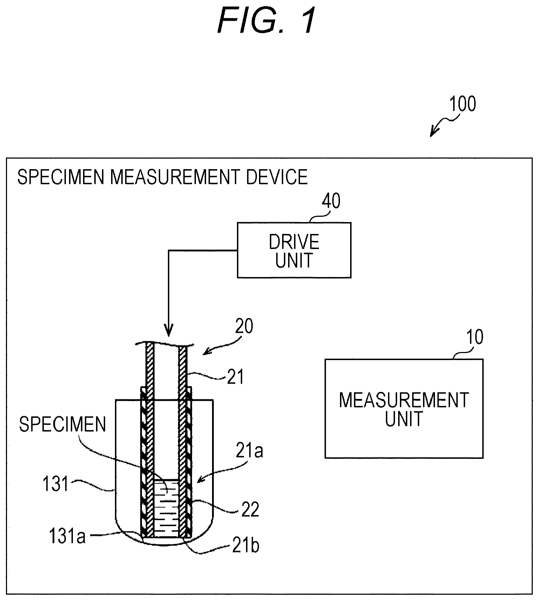

As illustrated in FIG. 1, a specimen measurement device (100) according to a first aspect of the present invention includes: a nozzle (21) having an area (21a) on a distal end side being covered by a hydrophobic coating (22); a measurement unit (10) that measures a specimen dispensed into a container (131) by the nozzle (21); and a drive unit (40) that moves the nozzle (21) so as to abut on a bottom surface (131a) of the container (131), the nozzle (21) having a distal end surface (21b) on a discharge port side being exposed from the hydrophobic coating (22).

In the specimen measurement device (100) according to the first aspect, the hydrophobic coating (22) is not formed on the distal end surface (21b) on the discharge port side of the nozzle (21) that is likely to come into contact with the bottom surface (131a) of the container (131) with the above-described configuration. Thus, the hydrophobic coating (22) can be prevented from being peeled off from the nozzle (21) even when the bottom surface (131a) of the container (131) comes into contact with the nozzle (21). As a result, it is possible to prevent peeled pieces of the hydrophobic coating (22) from being mixed into a specimen so that measurement of the specimen can be performed with high accuracy. When the nozzle (21) is cleaned with an oxidizing cleaning liquid, it is possible to prevent the cleaning liquid from remaining in the nozzle (21) after cleaning since the most portion other than the distal end surface (21b) in the area (21a) on the distal side of the nozzle (21) can be covered by the hydrophobic coating (22). In other words, the portion of the nozzle (21) covered by the hydrophobic coating (22) repels the cleaning liquid so that the cleaning liquid does not remain. The portion of the nozzle (21) that is exposed from the hydrophobic coating (22) is the distal end on the discharge port side, and thus, is disposed on the lower side of the nozzle (21). For this reason, a droplet attached to the portion exposed from the hydrophobic coating (22) merges with the cleaning liquid that falls downward as being repelled by the hydrophobic coating (22) in the upper portion of the nozzle (21) covered by the hydrophobic coating (22) and drop downward by inertia. The droplet does not remain on the surface of the nozzle (21). As a result, it is possible to prevent the portion of the nozzle (21) exposed from the hydrophobic coating (22) from being oxidized. Accordingly, the measurement of the specimen can be performed with high accuracy while preventing the oxidation of the nozzle (21).

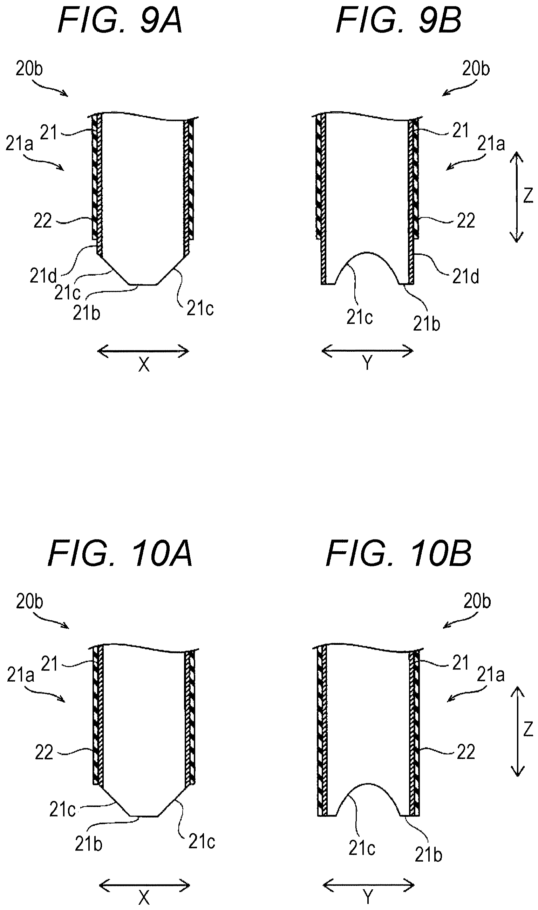

As illustrated in FIGS. 9A to 11, in the specimen measurement device (100) according to the first aspect, an outer peripheral surface (21d) of the nozzle (21), which is near the distal end surface (21b) and connected to the distal end surface (21b), is preferably exposed from the hydrophobic coating (22). With such a configuration, the hydrophobic coating (22) is not formed on the outer peripheral surface (21d), which is near the distal end surface (21b) and connected to the distal end surface (21b) on the discharge port side of the nozzle (21). Thus, when the bottom surface (131a) of the container (131) abutting on the nozzle (21) has a curved surface, the hydrophobic coating (22) can be prevented from being peeled off from the nozzle (21) even if a side surface of the nozzle (21) near the distal end surface (21b) comes into contact with the curved surface of the bottom surface (131a) of the container (131).

As illustrated in FIGS. 9A, 9B, 10A, and 10B, in the specimen measurement device (100) according to the first aspect, the nozzle (21) preferably has an inclined surface (21c) at the distal end on the discharge port side, and the inclined surface (21c) is preferably connected to the distal end surface (21b) and is exposed from the hydrophobic coating (22). With such a configuration, a gap can be provided between the nozzle (21) and the bottom surface (131a) of the container (131) by the inclined surface (21c) provided in the nozzle (21) when discharging the specimen while bringing the nozzle (21) into contact with the bottom surface (131a) of the container (131). Thus, the specimen can be transferred from the nozzle (21) to the bottom surface (131a) of the container (131). When the bottom surface (131a) of the container (131) abutting on the nozzle (21) has a curved surface, the hydrophobic coating (22) is not formed on the inclined surface (21c) at the distal end on the discharge port side of the nozzle (21) even if the inclined surface (21c) of the nozzle (21) near the distal end surface (21b) comes into contact with the curved surface of the bottom surface (131a) of the container (131). Thus, the hydrophobic coating (22) can be prevented from being peeled off from the nozzle (21).

As illustrated in FIGS. 9A and 9B, in this case, the outer peripheral surface (21d), which is near the distal end surface (21b) and connected to the inclined surface (21c), of the nozzle (21) is preferably exposed from the hydrophobic coating (22). With such a configuration, when the bottom surface (131a) of the container (131) abutting on the nozzle (21) has a curved surface, the hydrophobic coating (22) is not formed on the outer peripheral surface (21d) and the inclined surface (21c), which are near the distal end surface (21b) and connected to the distal end surface (21b) on the discharge port side of the nozzle (21), even if the side surface or the inclined surface (21c) near the distal end surface (21b) of the nozzle (21) comes into contact with the curved surface of the bottom surface (131a) of the container (131). Thus, the hydrophobic coating (22) can be prevented from being peeled off from the nozzle (21).

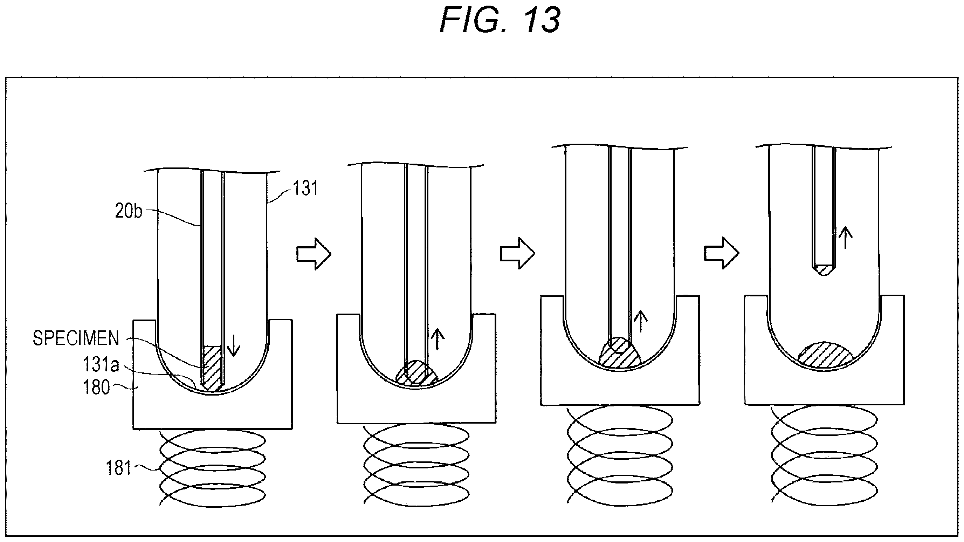

As illustrated in FIG. 13, in the specimen measurement device (100) according to the first aspect, the nozzle (21) preferably dispenses the specimen into the container (131) by spotting. With such a configuration, the specimen can be transferred to the bottom surface (131a) of the container (131) using the surface tension without remaining in the nozzle (21), and thus, it is possible to accurately dispense a small amount of the specimen.

As illustrated in FIG. 13, in this case, preferably, a spotting unit (180) that holds the container (131) in which the specimen is dispensed to be movable in the up-down direction and spots the specimen by the nozzle (21) is further provided. With such a configuration, when the nozzle (21) and the container (131) come into contact with each other by spotting, an excessive force can be released by the spotting unit (180), and thus, it is possible to prevent the excessive force from being applied to the nozzle (21) and the container (131).

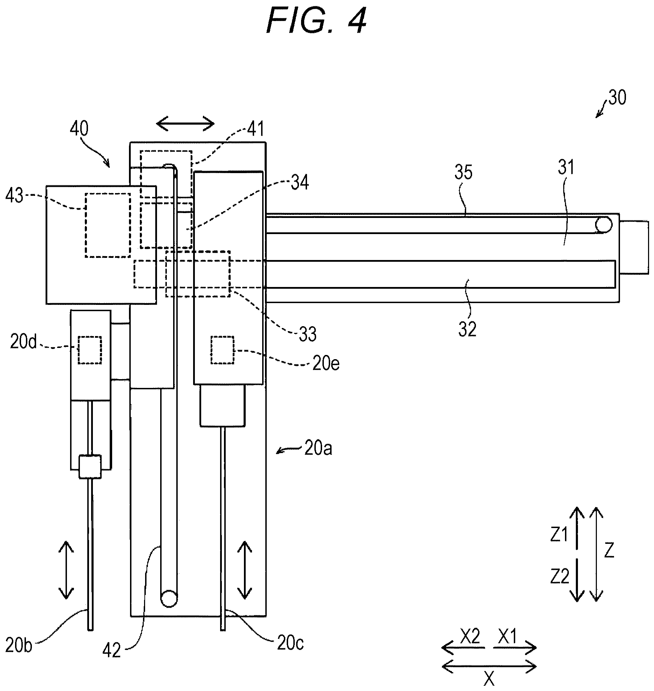

As illustrated in FIG. 4, in the specimen measurement device (100) according to the first aspect, the nozzle (21) preferably has a function of detecting a liquid level of the specimen. With such a configuration, the distal end surface (21b) of the nozzle (21) detecting the liquid level is exposed from the hydrophobic coating (22), and thus, it is possible to prevent a decrease in the liquid level detection sensitivity, which is different from the case where the distal end surface (21b) of the nozzle (21) is covered by the hydrophobic coating (22).

As illustrated in FIG. 1, in the specimen measurement device (100) according to the first aspect, the nozzle (21) is preferably formed using metal, and the hydrophobic coating (22) preferably includes a silicon-based material or a fluorine-based material. With such a configuration, the mechanical strength of the nozzle (21) can be increased, and the silicon-based material or the fluorine-based material can enhance the water repellency of the area (21a) on the distal end side of the nozzle (21).

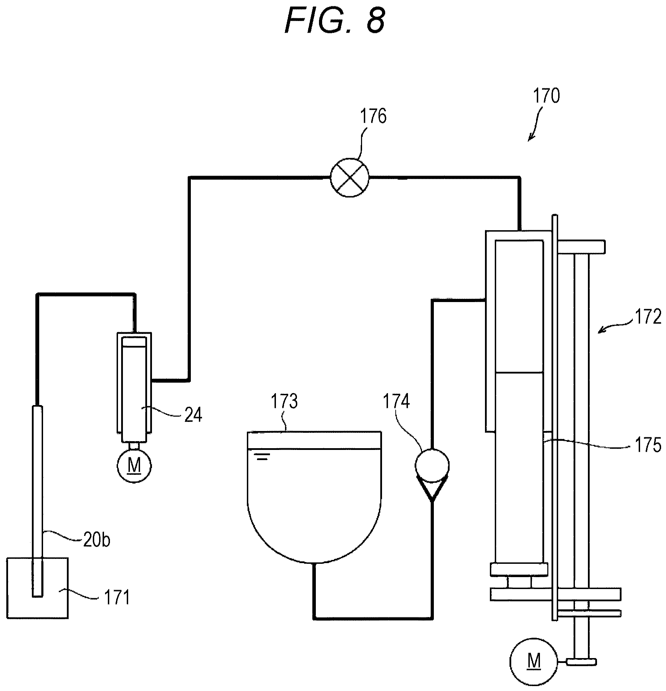

As illustrated in FIG. 8, preferably, the specimen measurement device (100) according to the first aspect further includes a cleaner (171) that cleans the nozzle (21) each time the specimen is suctioned. As described above, even when the cleaner (171) is provided and the nozzle (21) is cleaned with the cleaning liquid, it is possible to prevent the nozzle (21) from being oxidized.

As illustrated in FIG. 1, a specimen measurement method according to a second aspect of the present invention includes: a step of dispensing a specimen into a container (131) using a nozzle (21) having an area (21a) on a distal end side being covered by a hydrophobic coating (22) and a distal end surface (21b) on a discharge port side being exposed from the hydrophobic coating (22); and a step of measuring the specimen dispensed into the container (131) by the nozzle (21), and the dispensing step includes a step of dispensing the specimen by causing the nozzle (21) having the distal end surface (21b) on the discharge port side being exposed from the hydrophobic coating (22) to abut on a bottom surface (131a) of the container (131).

In the specimen measurement method according to the second aspect, the hydrophobic coating (22) is not formed on the distal end surface (21b) on the discharge port side of the nozzle (21) that is likely to come into contact with the bottom surface (131a) of the container (131) with the above-described configuration. Thus, the hydrophobic coating (22) can be prevented from being peeled off from the nozzle (21) even when the bottom surface (131a) of the container (131) comes into contact with the nozzle (21). As a result, it is possible to prevent peeled pieces of the hydrophobic coating (22) from being mixed into a specimen so that measurement of the specimen can be performed with high accuracy. When the nozzle (21) is cleaned with an oxidizing cleaning liquid, it is possible to prevent the cleaning liquid from remaining in the nozzle (21) after cleaning since the most portion other than the distal end surface (21b) in the area (21a) on the distal side of the nozzle (21) is covered by the hydrophobic coating (22). In other words, the portion of the nozzle (21) covered by the hydrophobic coating (22) repels the cleaning liquid so that the cleaning liquid does not remain. The portion of the nozzle (21) that is exposed from the hydrophobic coating (22) is the distal end on the discharge port side, and thus, is disposed on the lower side of the nozzle (21). For this reason, a droplet attached to the portion exposed from the hydrophobic coating (22) merges with the cleaning liquid that falls downward as being repelled by the hydrophobic coating (22) in the upper portion of the nozzle (21) covered by the hydrophobic coating (22) and drop downward by inertia. The droplet does not remain on the surface of the nozzle (21). As a result, it is possible to prevent the portion of the nozzle (21) exposed from the hydrophobic coating (22) from being oxidized. Accordingly, it is possible to provide the specimen measurement method capable of performing the measurement of the specimen with high accuracy while preventing the oxidation of the nozzle (21).

As illustrated in FIG. 13, in the specimen measurement method according to the second aspect, the dispensing step preferably includes a step of dispensing the specimen into the container (131) by spotting. With such a configuration, the specimen can be transferred to the bottom surface (131a) of the container (131) using the surface tension without remaining in the nozzle (21), and thus, it is possible to accurately dispense a small amount of the specimen.

As illustrated in FIG. 13, in this case, the dispensing step preferably includes a step of holding the container (131) in which the specimen is dispensed to be movable in an up-down direction and dispensing the specimen while bringing the nozzle (21) into contact with the bottom surface (131a) of the container (131). With such a configuration, when the nozzle (21) and the container (131) come into contact with each other by spotting, an excessive force can be released by the spotting unit (180), and thus, it is possible to prevent the excessive force from being applied to the nozzle (21) and the container (131).

As illustrated in FIG. 1, in the specimen measurement method according to the second aspect, the nozzle (21) is preferably formed using metal, and the hydrophobic coating (22) preferably includes a silicon-based material or a fluorine-based material. With such a configuration, the mechanical strength of the nozzle (21) can be increased, and the silicon-based material or the fluorine-based material can enhance the water repellency of the area (21a) on the distal end side of the nozzle (21).

As illustrated in FIG. 4, preferably, the specimen measurement method according to the second aspect further includes a step of detecting a liquid level of the specimen using the nozzle (21). With such a configuration, the distal end surface (21b) of the nozzle (21) detecting the liquid level is exposed from the hydrophobic coating (22), and thus, it is possible to prevent a decrease in the liquid level detection sensitivity, which is different from the case where the distal end surface (21b) of the nozzle (21) is covered by the hydrophobic coating (22).

As illustrated in FIG. 8, preferably, the specimen measurement method according to the second aspect further includes a step of cleaning the nozzle (21) each time the specimen is suctioned. As described above, even when the nozzle (21) is cleaned with the cleaning liquid, it is possible to prevent the nozzle (21) from being oxidized.

A nozzle (21) according to a third aspect of the present invention is the nozzle (21) having an area (21a) on a distal end side being covered by a hydrophobic coating (22) as illustrated in FIG. 1. The nozzle (21) dispenses a specimen while abutting on a bottom surface (131a) of a container (131), and has a distal end surface (21b) on a discharge port side being exposed from the hydrophobic coating.

In the nozzle (21) according to the third aspect, the hydrophobic coating (22) is not formed on the distal end surface (21b) on the discharge port side of the nozzle (21) that is likely to come into contact with the bottom surface (131a) of the container (131) with the above-described configuration. Thus, the hydrophobic coating (22) can be prevented from being peeled off from the nozzle (21) even when the bottom surface (131a) of the container (131) comes into contact with the nozzle (21). As a result, it is possible to prevent peeled pieces of the hydrophobic coating (22) from being mixed into a specimen so that measurement of the specimen can be performed with high accuracy. When the nozzle (21) is cleaned with an oxidizing cleaning liquid, it is possible to prevent the cleaning liquid from remaining in the nozzle (21) after cleaning since the most portion other than the distal end surface (21b) in the area (21a) on the distal side of the nozzle (21) is covered by the hydrophobic coating (22). In other words, the portion of the nozzle (21) covered by the hydrophobic coating (22) repels the cleaning liquid so that the cleaning liquid does not remain. The portion of the nozzle (21) that is exposed from the hydrophobic coating (22) is the distal end on the discharge port side, and thus, is disposed on the lower side of the nozzle (21). For this reason, a droplet attached to the portion exposed from the hydrophobic coating (22) merges with the cleaning liquid that falls downward as being repelled by the hydrophobic coating (22) in the upper portion of the nozzle (21) covered by the hydrophobic coating (22) and drop downward by inertia. The droplet does not remain on the surface of the nozzle (21). As a result, it is possible to prevent the portion of the nozzle (21) exposed from the hydrophobic coating (22) from being oxidized. Accordingly, it is possible to provide the nozzle (21) capable of performing the measurement of the specimen with high accuracy while preventing the oxidation.

As illustrated in FIGS. 9A to 11, in the nozzle (21) according to the third aspect, an outer peripheral surface (21d), which is near the distal end surface (21b) and connected to the distal end surface (21b), is preferably exposed from the hydrophobic coating (22). With such a configuration, the hydrophobic coating (22) is not formed on the outer peripheral surface (21d), which is near the distal end surface (21b) and connected to the distal end surface (21b) on the discharge port side of the nozzle (21). Thus, when the bottom surface (131a) of the container (131) abutting on the nozzle (21) has a curved surface, the hydrophobic coating (22) can be prevented from being peeled off from the nozzle (21) even if a side surface of the nozzle (21) near the distal end surface (21b) comes into contact with the curved surface of the bottom surface (131a) of the container (131).

As illustrated in FIGS. 9A, 9B, 10A, and 10B, the nozzle (21) according to the third aspect preferably has an inclined surface (21c) at the distal end on the discharge port side, and the inclined surface (21c) is preferably connected to the distal end surface (21b) and is exposed from the hydrophobic coating (22). With such a configuration, a gap can be provided between the nozzle (21) and the bottom surface (131a) of the container (131) by the inclined surface (21c) provided in the nozzle (21) when discharging the specimen while bringing the nozzle (21) into contact with the bottom surface (131a) of the container (131). Thus, the specimen can be transferred from the nozzle (21) to the bottom surface (131a) of the container (131). When the bottom surface (131a) of the container (131) adjacent to the nozzle (21) has a curved surface, the hydrophobic coating (22) is not formed on the inclined surface (21c) at the distal end on the discharge port side of the nozzle (21) even if the inclined surface (21c) of the nozzle (21) near the distal end surface (21b) comes into contact with the curved surface of the bottom surface (131a) of the container (131). Thus, the hydrophobic coating (22) can be prevented from being peeled off from the nozzle (21).

As illustrated in FIGS. 9A and 9B, in this case, the outer peripheral surface (21d), which is near the distal end surface (21b) and connected to the inclined surface (21c), is preferably exposed from the hydrophobic coating (22). With such a configuration, when the bottom surface (131a) of the container (131) adjacent to the nozzle (21) has a curved surface, the hydrophobic coating (22) is not formed on the outer peripheral surface (21d) and the inclined surface (21c), which are near the distal end surface (21b) and connected to the distal end surface (21b) on the discharge port side of the nozzle (21), even if the side surface or the inclined surface (21c) near the distal end surface (21b) of the nozzle (21) comes into contact with the curved surface of the bottom surface (131a) of the container (131). Thus, the hydrophobic coating (22) can be prevented from being peeled off from the nozzle (21).

As illustrated in FIG. 4, the nozzle (21) according to the third aspect preferably has a function of detecting a liquid level of the specimen. With such a configuration, the distal end surface (21b) of the nozzle (21) detecting the liquid level is exposed from the hydrophobic coating (22), and thus, it is possible to prevent a decrease in the liquid level detection sensitivity, which is different from the case where the distal end surface (21b) of the nozzle (21) is covered by the hydrophobic coating (22).

As illustrated in FIG. 4, in the nozzle (21) according to the third aspect, the nozzle (21) is preferably formed using metal, and the hydrophobic coating (22) preferably includes a silicon-based material or a fluorine-based material. With such a configuration, the mechanical strength of the nozzle (21) can be increased, and the silicon-based material or the fluorine-based material can enhance the water repellency of the area (21a) on the distal end side of the nozzle (21).

### BRIEF DESCRIPTION OF THE DRAWINGS

FIG. 1 is a schematic diagram illustrating an outline of a specimen measurement device;
FIG. 2 is a schematic plan view illustrating configuration examples of the specimen measurement device and a blood coagulation measurement device;
FIG. 3 is a plan view illustrating the configuration example of the specimen measurement device;
FIG. 4 is a side view illustrating a moving unit of the specimen measurement device;
FIG. 5 is a rear view illustrating the moving unit of the specimen measurement device;
FIG. 6 is a view illustrating dispensing of a specimen by a dispenser of the specimen measurement device;
FIG. 7 is a view illustrating dispensing of a reagent by the dispenser of the specimen measurement device;
FIG. 8 is a diagram illustrating a cleaning unit of the specimen measurement device;
FIG. 9A is a view illustrating a distal end of a nozzle of the dispenser;
FIG. 9B is a view illustrating the distal end of the nozzle of the dispenser;
FIG. 10A is a view illustrating a distal end of a nozzle of a dispenser according to a first modification;
FIG. 10B is a view illustrating the distal end of the nozzle of the dispenser according to the first modification;
FIG. 11 is a view illustrating a distal end of a nozzle of a dispenser according to a second modification;
FIG. 12 is a view illustrating the distal end of the nozzle of the dispenser;
FIG. 13 is a view illustrating a spotting process of the specimen measurement device;
FIG. 14 is a view illustrating a measurement process of the specimen measurement device;
FIG. 15 is a flowchart illustrating the measurement process illustrated in FIG. 14; and

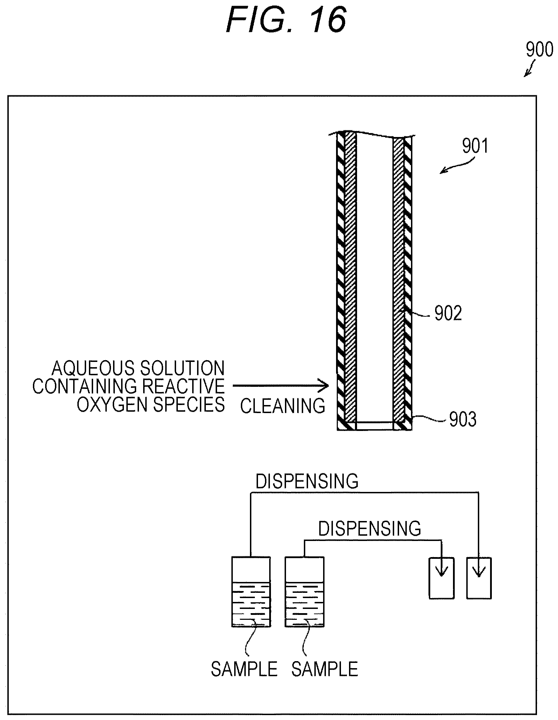

FIG. 16 is a view illustrating the related art.

### DETAILED DESCRIPTION OF THE PREFERRED EMBODIMENTS

Hereinafter, embodiments will be described with reference to the drawings.

### [Overview of Specimen Measurement Device]

First, an overview of a specimen measurement device 100 according to one embodiment will be described with reference to FIG. 1.

The specimen measurement device 100 is a device that measures a measurement sample prepared by adding a predetermined reagent to a sample collected from a subject.

The subject is mainly a human, but may be another animal other than a human. The specimen measurement device 100 performs measurement for a clinical test or medical research on a specimen collected from a patient, for example. The specimen is a specimen derived from a living body. Examples of the specimen derived from the living body include a liquid collected from a subject, such as blood (whole blood, serum, or plasma), urine, and other body fluids, a liquid obtained by subjecting a collected body fluid or blood to a predetermined pretreatment. The specimen may be, for example, a part of a tissue or a cell of the subject other than the liquid. The specimen measurement device 100 detects a predetermined target component contained in the specimen. The target component may include, for example, a predetermined component, a cell, or a solid component in blood or a urine specimen. The target component may be a nucleic acid such as DNA (deoxyribonucleic acid), a cell and an intracellular substance, an antigen or an antibody, a protein, a peptide, and the like. The specimen measurement device 100 may be a blood cell counter, a blood coagulation measurement device, an immunoassay device, a urinary solid component measurement device, or a measurement device other than these.

As an example, the specimen measurement device 100 is the immunoassay device that detects a test substance in a specimen using an antigen-antibody reaction. The immunoassay device detects, for example, an antigen or an antibody, a protein, a peptide, or the like contained in blood as a target component. The immunoassay device acquires serum or plasma as a specimen and quantitatively or qualitatively measures an antigen or an antibody contained in the specimen. The antigen-antibody reaction includes not only a reaction between an antigen and an antibody but also a reaction using a specific binding substance such as an aptamer. The aptamer is a nucleic acid molecule or peptide synthesized to be specifically bound to a specific substance.

As illustrated in FIG. 1, the specimen measurement device 100 includes a measurement unit 10, a dispenser 20, and a drive unit 40.

The measurement unit 10 is configured to detect and measure a component contained in a specimen. Specifically, the measurement unit 10 measures a measurement sample in which a reagent has been added to a specimen, and detects the component of the specimen. There is no limitation on a method of detecting the target component by the measurement unit 10, and it is possible to adopt a method according to the target component, such as a chemical method, an optical method, and an electromagnetic method. For example, the presence or absence of the target component, the number or amount of the target component, the concentration and the abundance ratio of the target component, and the like are analyzed based on a detection result of the measurement unit 10.

The dispenser 20 suctions and discharges a liquid for adjustment of the measurement sample. The dispenser 20 is configured to suction and discharge the liquid. The dispenser 20 dispenses the specimen into a container 131. The dispenser 20 abuts on a bottom surface 131a of the container 131 to dispense the specimen.

The dispenser 20 includes a tubular nozzle 21 and a hydrophobic coating 22 that covers an area 21a on a distal end side of the nozzle 21. In the nozzle 21, a distal end surface 21b on a discharge port side is exposed from a hydrophobic coating 22. That is, in the nozzle 21, at least the distal end surface 21b is not covered by the hydrophobic coating 22 in the area 21a on the distal end side. In other words, the nozzle 21 is covered by the hydrophobic coating 22 in the area 21a on the distal end side except for a part near the discharge port where the contact with the bottom surface 131a of the container 131 may occur.

The nozzle 21 may be formed using, for example, a metal material. The nozzle 21 is formed using, for example, stainless steel, aluminum, or iron. Preferably, the nozzle 21 is formed using stainless steel. The nozzle 21 may be formed using glass, ceramic, or resin. The nozzle 21 is disposed so as to extend in the up-down direction.

The area 21a on the distal end side of the nozzle 21 that is covered by the hydrophobic coating 22 is a portion that is likely to come into contact with a liquid such as a specimen, a reagent, and a cleaning liquid. For example, the area 21a on the distal end side is within a range of several mm to several tens mm from the discharge port of the dispenser 20.

The hydrophobic coating 22 is provided on the outer periphery of the tubular nozzle 21. The hydrophobic coating 22 has hydrophobicity. That is, the hydrophobic coating 22 has a property of repelling moisture. The hydrophobic coating 22 is formed using, for example, a fluorine-based material, a silicon-based material, or the like. The hydrophobic coating 22 is formed, for example, by performing immersion, coating, spraying, plating, and the like on the nozzle 21.

The drive unit 40 moves the dispenser 20 so as to abut on the bottom surface 131a of the container 131. Specifically, when dispensing is performed by the dispenser 20, the drive unit 40 moves the dispenser 20 in the up-down direction.

A specimen measurement method performed by the specimen measurement device 100 includes: a step of dispensing a specimen using the dispenser 20 that includes the tubular nozzle 21 and the hydrophobic coating 22 covering the area 21a on the distal end side of the nozzle 21; and a step of measuring the dispensed specimen. The dispensing step includes a step of dispensing the specimen by bringing the nozzle 21 in which the distal end surface 21b on the discharge port side is exposed from the hydrophobic coating 22 close to the bottom surface 131a of the container 131.

Since the hydrophobic coating 22 is not formed on the distal end surface 21b on the discharge port side of the dispenser 20 that is likely to come into contact with the bottom surface 131a of the container 131 in the specimen measurement device 100 of the present embodiment as described above, it is possible to prevent the hydrophobic coating 22 from being peeled off from the nozzle 21 even when the bottom surface 131a of the container 131 comes into contact with the dispenser 20 As a result, it is possible to prevent peeled pieces of the hydrophobic coating 22 from being mixed into the specimen so that the measurement of the specimen can be performed with high accuracy. When the dispenser 20 is cleaned with an oxidizing cleaning liquid, it is possible to prevent the cleaning liquid from remaining in the dispenser 20 after cleaning since the most portion other than the distal end surface 21b in the area 21a on the distal side of the dispenser 20 is covered by the hydrophobic coating 22. In other words, the portion of the nozzle 21 covered by the hydrophobic coating 22 repels the cleaning liquid so that the cleaning liquid does not remain. The portion of the nozzle 21 that is exposed from the hydrophobic coating 22 is the distal end on the discharge port side, and thus, is disposed on the lower side of the nozzle 21. For this reason, a droplet attached to the portion exposed from the hydrophobic coating 22 merges with the cleaning liquid that falls downward as being repelled by the hydrophobic coating 22 in the upper portion of the nozzle 21 covered by the hydrophobic coating 22 and drop downward by inertia. Thus, the droplet does not remain on the surface of the nozzle 21. As a result, it is possible to prevent the portion of the nozzle 21 exposed from the hydrophobic coating 22 from being oxidized. Accordingly, the measurement of the specimen can be performed with high accuracy while preventing the oxidation of the nozzle 21.

### [Specific Configuration Example of Specimen Measurement Device]

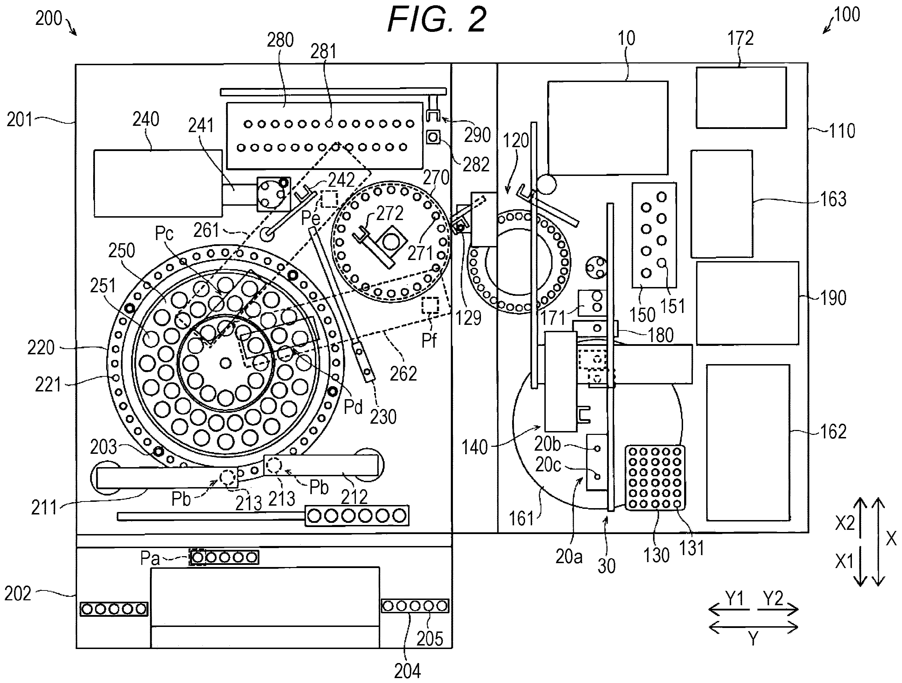

Next, a specific configuration example of the specimen measurement device 100 will be described in detail with reference to FIGS. 2 to 15. In the example in FIGS. 2 to 15, the specimen measurement device 100 is an immunoassay device that detects a test substance in a specimen using an antigen-antibody reaction. In the example in FIGS. 2 to 15, the specimen measurement device 100 is connected to a blood coagulation measurement device 200. The specimen measurement device 100 may be used alone without being connected to the blood coagulation measurement device 200.

### (Configuration of Blood Coagulation Measurement Device)

In the configuration example in FIG. 2, the blood coagulation measurement device 200 includes a measurement unit 201 and a transport unit 202. In the configuration example in FIG. 2, the specimen measurement device 100 that is the immunoassay device is connected to the blood coagulation measurement device 200.

In the configuration example in FIG. 2, the blood coagulation measurement device 200 has a function of suctioning a specimen from a specimen container that stores the specimen and dispensing the specimen into a container 203 in a fixed amount.

A specimen rack 204 is installed in the transport unit 202. In the specimen rack 204, a plurality of the specimen containers 205 each containing the specimen can be installed. The transport unit 202 transports the specimen rack 204 installed by a user, and positions each of the specimen containers 205 at a predetermined specimen suction position Pa in a plan view. A label (not illustrated) recording identification information in a barcode or the like is attached to the specimen rack 204 and the specimen container 205. The identification information of the specimen rack 204 and the specimen container 205 is read by a reader installed on a transport path. With the identification information, a specimen in the specimen container 205 and a measurement result of the specimen are managed in association with each other. The specimen container 205 is, for example, a blood collection tube.

The measurement unit 201 includes specimen dispensers 211 and 212 configured to suction a specimen in the specimen container 205 and dispense the specimen into the container 203 in a fixed amount.

The specimen dispensers 211 and 212 include dispensing arms that hold specimen dispensing pipettes 213 in a rotatable manner. The pipette 213 is connected to a pump and can suction and discharge the specimen in a fixed amount. The specimen dispensers 211 and 212 can move the pipettes 213, respectively, to suction a predetermined amount of the specimen from the specimen container 205 at the specimen suction position Pa. The specimen dispensers 211 and 212 can move the pipettes 213, respectively, to discharge the suctioned specimen into the container 203 disposed at a predetermined specimen discharge position Pb. The container 203 is, for example, a cuvette.

The measurement unit 201 performs optical measurement on a measurement sample prepared by adding a predetermined reagent to the specimen suctioned by the specimen dispenser 211 or 212. The blood coagulation measurement device 200 may be configured to perform measurement on the container 203 in which a fixed amount of the specimen has been dispensed in advance without including the transport unit 202 and the specimen dispensers 211 and 212.

The measurement unit 201 includes a mechanism for transferring the container 203 which contains a specimen and a reagent and in which a measurement sample is prepared to the respective units. In the configuration example in FIG. 2, the measurement unit 201 includes a container table 220. The container table 220 has a ring shape in a plan view, and can rotate in the circumferential direction. The container table 220 includes a plurality of holding holes 221 arranged along the circumferential direction. One container 203 can be installed in each of the holding holes 221. The specimen dispensers 211 and 212 can dispense the suctioned specimen into a new container 203 held on the container table 220 at the specimen discharge position Pb in a plan view. The specimen dispensers 211 and 212 can also suction the specimen from the container 203 that contains the specimen on the container table 220.

The measurement unit 201 includes a transfer unit 230 that positions the new container 203 at the specimen discharge position Pb. The transfer unit 230 can move an installation base provided with a holding hole for installation of the container 203 along a rail. For example, two holding holes are provided. The specimen dispenser 212 can dispense the suctioned specimen into the new container 203 held by the transfer unit 230.

A large number of new containers 203 are stored in a container storage unit 240, and are taken out of the container storage unit 240 one by one by a container supply unit 241. The container 203 taken out by the container supply unit 241 is gripped by a gripping mechanism 242 and taken out. The gripping mechanism 242 can install the taken-out container 203 in the holding hole 221 of the container table 220 or the holding hole of the transfer unit 230.

In the configuration example in FIG. 2, the blood coagulation measurement device 200 has a function of adding a reagent to a specimen in the container 203 to prepare a measurement sample. The measurement sample is a mixed solution of the specimen and the reagent.

The measurement unit 201 includes a reagent table 250 containing a reagent container 251 used for measurement and reagent dispensers 261 and 262 configured to suction and discharge the reagent from the reagent container 251 installed on the reagent table 250.

The reagent table 250 is disposed inside the container table 220, and has a circular shape in a plan view. The plurality of reagent containers 251 can be installed on the reagent table 250 along the circumferential direction. The reagent table 250 is rotatable in the circumferential direction, and can position arbitrary reagent containers 251 at reagent suction positions Pc and Pd in a predetermined plan view by the rotation.

The reagent dispensers 261 and 262 include reagent dispensing pipettes (not illustrated). The pipette is connected to a pump (not illustrated) and can suction and discharge the reagent in a fixed amount. The reagent dispensers 261 and 262 can suction each predetermined amount of reagents from the reagent containers 251 positioned at the predetermined reagent suction positions Pc and Pd on the reagent table 250, respectively. The reagent dispensers 261 and 262 can move the pipettes to the reagent discharge positions Pe and Pf, respectively, in a plan view to discharge each predetermined amount of reagents into the containers 203 at the reagent discharge positions.

The measurement unit 201 includes a heating table 270 configured to hold and heat the container 203 into which a specimen has been dispensed. The heating table 270 includes a plurality of holding holes 271 configured to hold the plurality of containers 203 containing specimens, respectively, and a gripping mechanism 272 configured to hold and transfer the containers 203. The heating table 270 has a built-in heater configured to heat the containers 203 respectively held in the plurality of holding holes 271.

The heating table 270 has a circular shape in a plan view, and has the plurality of holding holes 271 arranged in the circumferential direction. The heating table 270 is rotatable in the circumferential direction, and can transfer the containers 203 installed in the plurality of holding holes 271 in the circumferential direction by the rotation while being heated to a predetermined temperature by the heater. The gripping mechanism 272 can grip and transfer the container 203, install the container 203 in the holding hole 271 or take out the container 203 from the holding hole 271.

The gripping mechanism 272 can transfer the container 203 installed in the transfer unit 230 to the holding hole 271 of the heating table 270. The gripping mechanism 272 can take out the containers 203 heated in the holding holes 271 of the heating table 270 and transfer the containers 203 to the reagent discharge positions Pe and Pf, respectively. The gripping mechanism 272 returns the container 203 into which a reagent has been dispensed by the reagent dispenser 261 or 262 to the holding hole 271 of the heating table 270.

The blood coagulation measurement device 200 may be configured to perform measurement on the container 203 in which a prepared measurement sample has been stored in advance without including the reagent table 250, the reagent dispenser 261, and the heating table 270.

The measurement unit 201 includes a detection unit 280 configured to perform optical measurement on a measurement sample in the container 203. The detection unit 280 includes a container installation unit 281 configured to install the container 203 containing a specimen, and a light receiving unit provided so as to correspond to the container installation unit 281.

In the configuration example in FIG. 2, the detection unit 280 includes a plurality of the container installation units 281. The detection unit 280 extends linearly along one side of the blood coagulation measurement device 200 in a plan view, and the plurality of container installation units 281 are arranged linearly in two rows at a predetermined interval.

The measurement unit 201 includes a gripping mechanism 290 configured to transfer the container 203 to the detection unit 280.

The gripping mechanism 290 includes a moving mechanism in each of the X, Y, and Z directions, which are orthogonal three axis directions, and can hold and transfer the container 203. The gripping mechanism 290 can take out the container 203 from the holding hole 271 of the heating table 270 and transfers the container 203 to the reagent discharge position Pe, and install the container 203 after dispensing of the reagent in the container installation unit 281 of the detection unit 280. The gripping mechanism 290 can take out the measured container 203 from the container installation unit 281 and transfer the container 203 to a disposal port 282.

Optical measurement is performed on a measurement sample in the container 203 installed in the container installation unit 281 of the detection unit 280. A light irradiation unit irradiates the container 203 installed in the container installation unit 281 of the detection unit 280 with measurement light. The light receiving unit receives transmitted light or scattered light of the light emitted to the container 203, and outputs an electric signal corresponding to the amount of received light. The specimen is measured based on the output electric signal.

The blood coagulation measurement device 200 can pass a specimen to the specimen measurement device 100. Specifically, the blood coagulation measurement device 200 transports a specimen container 129 to the specimen measurement device 100 via the container table 220 and the heating table 270. The specimen container 129 is, for example, a cuvette.

### (Configuration of Specimen Measurement Device)

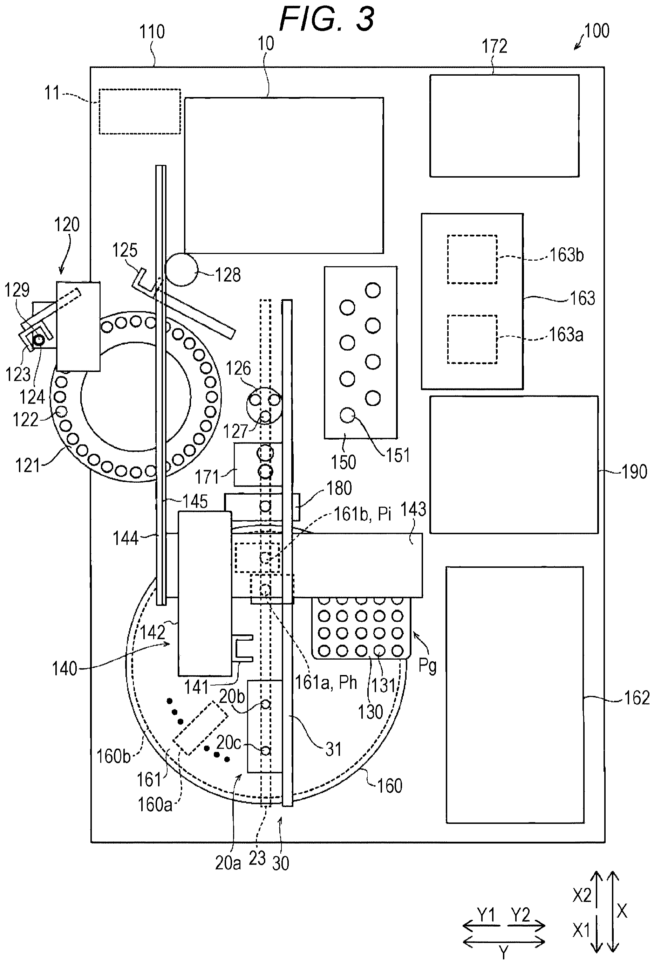

As illustrated in FIG. 2, the specimen measurement device 100, which is the immunoassay device, is connected to the blood coagulation measurement device 200. As illustrated in FIG. 3, the specimen measurement device 100 includes the measurement unit 10, a control unit 11, a dispensing unit 20a, a moving unit 30, the drive unit 40, a housing 110, the specimen transport unit 120, the container supply unit 130, the container transport unit 140, a heating unit 150, a reagent container holding unit 161, a reagent cooling unit 162, a reagent dispenser 163, a cleaning unit 170, a spotting unit 180, and a BF separation unit 190.

The housing 110 has a box-like shape that can accommodate the respective units of the specimen measurement device 100 therein. The housing 110 may be configured to accommodate the respective units of the specimen measurement device 100 on a single layer or may have a hierarchical structure in which a plurality of layers are provided in the up-down direction so that each of the units of the specimen measurement device 100 are disposed to be allocated to each of the layers.

The specimen transport unit 120 is configured to transport a specimen collected from a subject to a position where the specimen is to be suctioned. The specimen transport unit 120 includes a delivery table 121, a delivery catcher 123, a delivery port 124, a transport unit 125, and a specimen supply unit 126. The specimen transport unit 120 receives a specimen from the blood coagulation measurement device 200, and transports the received specimen to the specimen supply unit 126. The specimen transport unit 120 transfers the specimen container 129 from which the specimen has been suctioned to the disposal port 128 and discards the specimen container 129.

The delivery table 121 has a ring shape in a plan view and can rotate in the circumferential direction. The delivery table 121 is provided with a plurality of holding holes 122 arranged in the circumferential direction. One specimen container 129 can be installed in each of the holding holes 122. The delivery catcher 123 conveys the specimen container 129 placed on the delivery port 124 to the holding hole 122 of the delivery table 121. The delivery catcher 123 is rotatable about a rotation axis in the vertical direction and is movable up and down in the vertical direction. The specimen container 129 transported from the blood coagulation measurement device 200 can be placed on the delivery port 124.

The transport unit 125 transports the specimen container 129 held in the holding hole 122 of the delivery table 121 to a holding hole 127 of the specimen supply unit 126. The transport unit 125 is disposed on an X2 direction side in the specimen measurement device 100, and transports the specimen container 129 containing a specimen. The transport unit 125 transports the specimen container 129 held in the holding hole 127 of the specimen supply unit 126 to the disposal port 128. The transport unit 125 transports the container 131 to be used for a reaction to the measurement unit 10. The transport unit 125 transports the container 131 from the measurement unit 10 to the disposal port 128. The transport unit 125 is rotatable about a rotation axis in the vertical direction and is movable up and down in the vertical direction. The transport unit 125 includes, for example, a catcher that holds the specimen container 129. The container 131 is, for example, a cuvette.

The specimen supply unit 126 has a circular shape in a plan view and can rotate in the circumferential direction. The specimen supply unit 126 is provided with a plurality of (three) holding holes 127 arranged along the circumferential direction. One specimen container 129 can be installed in each of the holding holes 127. The three holding holes 127 have depths different from each other. That is, the three holding holes 127 respectively correspond to containers having different heights.

The container supply unit 130 stores a plurality of the containers 131. The container supply unit 130 can supply the containers 131 to the container transport unit 140 one by one at a predetermined container supply position Pg in a plan view. The container supply unit 130 is movable in the front-rear direction (X direction). That is, when the container supply unit 130 is located on the near side (X1 direction side), the container 131 is supplied by a user. The container 131 is supplied to the specimen measurement device 100 in a state where the container supply unit 130 has been moved to the X2 direction side. The containers 131 may be supplied one by one, or the plurality of containers 131 may be supplied collectively by a rack or the like. The movement of the container supply unit 130 in the front-rear direction may be manually performed by the user, or may be automatically performed by a drive unit or the like.

The container transport unit 140 transfers the container 131. Specifically, the container transport unit 140 transports the container 131 along a movement direction of the dispensing unit 20a. The container transport unit 140 acquires the container 131 from the container supply position Pg, and transfers the container 131 to each processing position of the heating unit 150, the reagent dispenser 163, the spotting unit 180, and the BF separation unit 190. The container transport unit 140 includes a catcher 141, a support member 142, a support member 143, and a support member 144.

The catcher 141 grips the container 131. The catcher 141 can swing the container 131 in the state of gripping the container 131. The support member 142 supports the catcher 141 to be movable in the up-down direction (Z direction). The support member 143 supports the support member 142 to be movable in the left-right direction (Y direction). The support member 144 supports the support member 143 to be movable in the front-rear direction (X direction). The support member 144 is provided with a guide 145 extending in the X direction. That is, the guide 145 is disposed so as to extend in a direction in which dispensers 20b and 20c are arranged. Accordingly, the container transport unit 140 can transport the container 131 in the direction in which the dispensers 20b and 20c are arranged. The catcher 141 can move in the horizontal direction (XY direction) and can move in the up-down direction (Z direction).

The heating unit 150 includes a heater and a temperature sensor, holds the container 131, and heats a sample contained in the container 131 to cause a reaction. The heating unit 150 heats the container 131 into which a liquid has been dispensed. The heating unit 150 is provided with a plurality of holding holes 151. One container 131 can be installed in each of the holding holes 151. A specimen and a reagent contained in the container 131 react by the heating of the heating unit 150. One or a plurality of heating units 150 are provided inside the housing 110. The heating unit 150 may be fixedly installed in the housing 110, or may be provided to be movable inside the housing 110. When the heating unit 150 is configured to be movable, the heating unit 150 can also function as a part of the container transport unit.

The reagent container holding unit 161 can hold a plurality of reagent containers 160a. The reagent container holding unit 161 is provided in a reagent storage 160 having a cylindrical shape. The reagent storage 160 is disposed on the X1 direction side in the specimen measurement device 100. The reagent container 160a in which a reagent dispensed by the dispensing unit 20a is stored is installed in the reagent storage 160. The reagent storage 160 includes a reagent table 160b for a user to install a reagent. The reagent container holding unit 161 is provided on the near side (X1 direction side). The reagent container holding unit 161 has a circular shape in a plan view. The plurality of reagent containers 160a can be installed in the reagent container holding unit 161 along the circumferential direction. The reagent container holding unit 161 is rotatable in the circumferential direction, and can position an arbitrary reagent container 160a at a predetermined reagent suction position Ph or Pi in a plan view by the rotation. The reagent container holding unit 161 is provided with a cooling mechanism, and the reagent in the reagent container installed in the reagent container holding unit 161 is kept at a constant temperature suitable for storage. The reagent container holding unit 161 holds, for example, an R1 reagent, an R2 reagent, and an R3 reagent. Above the reagent container holding unit 161 at the reagent suction position Ph, a reagent supply unit 161a that supplies the R1 reagent and the R2 reagent is provided. The reagent supply unit 161a is provided with a lid that can be open and closed. The lid of the reagent supply unit 161a is open at the time of suctioning the reagent, and is closed at the other time. Above the reagent container holding unit 161 at the reagent suction position Pi, a reagent supply part 161b that supplies the R3 reagent is provided. The reagent supply unit 161b is provided with a lid that can be open and closed. The lid of the reagent supply unit 161b is open at the time of suctioning the reagent, and is closed at the other time. The reagent container holding unit 161 is disposed below the moving unit 30.

The reagent table 160b has a circular shape in a plan view. The plurality of reagent containers 160a can be installed on the reagent table 160b along the circumferential direction. The reagent table 160b is rotatable in the circumferential direction, and can position an arbitrary reagent container 160a at the reagent suction position Ph or Pi by the rotation.

The reagent cooling unit 162 cools an R4 reagent and an R5 reagent. The reagent cooling unit 162 keeps the R4 reagent and the R5 reagent at a constant temperature suitable for storage. The reagent dispenser 163 dispenses the R4 reagent and the R5 reagent into the container 131. The reagent dispenser 163 includes an R4 reagent dispenser 163a and an R5 reagent dispenser 163b. The R4 reagent dispenser 163a dispenses the R4 reagent into the container 131 to which the R4 reagent is supplied from the reagent cooling unit 162 and which has been transferred by the container transport unit 140. The R5 reagent dispenser 163b dispenses the R5 reagent into the container 131 to which the R5 reagent is supplied from the reagent cooling unit 162 and which has been transferred by the container transport unit 140. The R4 reagent dispenser 163a and the R5 reagent dispenser 163b are cleaned using a cleaning liquid each time the dispensing operation is performed.

The cleaning unit 170 cleans the dispenser 20b and the dispenser 20c using the cleaning liquid. Specifically, the cleaning unit 170 includes a cleaner 171, a high-pressure unit 172, a cleaning liquid container 173 (see FIG. 8), a back-flow check valve 174 (see FIG. 8), a high-pressure cleaning syringe 175 (see FIG. 8) and a solenoid valve 176 (see FIG. 8). The cleaner 171 cleans the nozzles of the dispenser 20b and the dispenser 20c that have suctioned liquids with the cleaning liquid each time the liquid is suctioned. Accordingly, the dispenser 20b and the dispenser 20c can be cleaned, and thus, can suction different liquids without replacing the nozzles. The cleaner 171 sequentially cleans the dispenser 20b and the dispenser 20c in an initial operation and an end operation of the specimen measurement device 100. As the cleaning liquid, for example, an aqueous sodium hypochlorite solution, water, or the like is used.

The cleaner 171 discharges the cleaning liquid from inside the nozzle, and cleans the nozzle with the cleaning liquid from outside the nozzle. After dispensing the liquid suctioned by the nozzle into the container 131, the cleaning liquid is discharged from the nozzle that has suctioned the liquid. Accordingly, the inside of the nozzle can be effectively cleaned with the cleaning liquid.

The cleaner 171 is provided commonly to the dispenser 20b and the dispenser 20c. The cleaner 171 is disposed below the moving unit 30. The dispenser 20c dispenses the R2 reagent and the R3 reagent above the cleaner 171.

The spotting unit 180 can hold the container 131 to be movable in the up-down direction (Z direction). In the spotting unit 180, a specimen is dispensed into the container 131 by spotting. In the spotting unit 180, the R1 reagent is dispensed. The spotting unit 180 has an elastic member 181 (see FIG. 13) that is deformed in the up-down direction. The elastic member 181 includes, for example, a leaf spring, a coil spring, and the like. Details of the spotting operation will be described later.

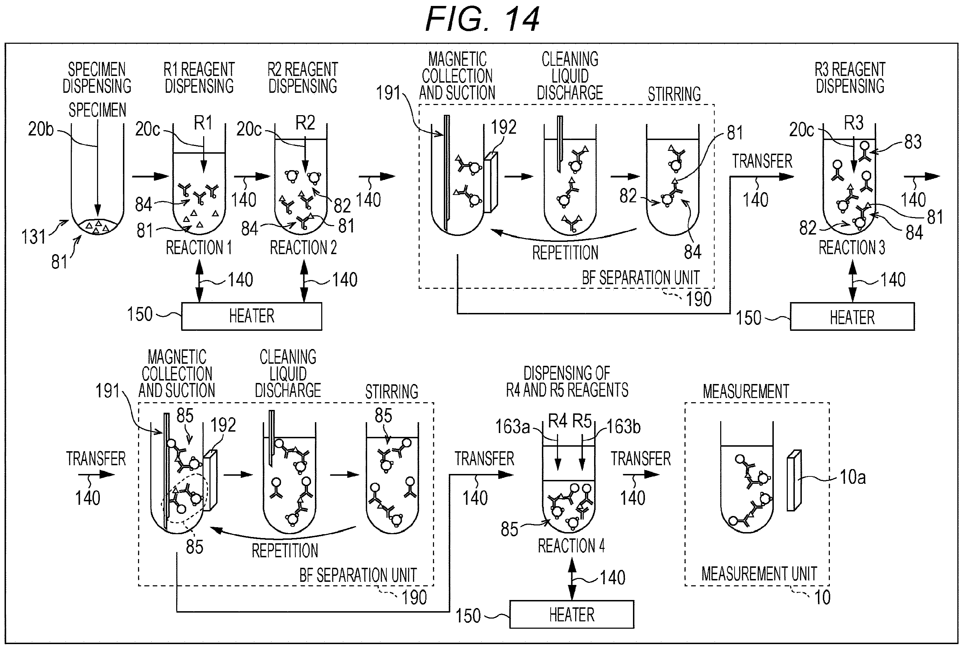

The BF separation unit 190 has a function of executing a BF separation process of separating a liquid phase and a solid phase from the container 131. The BF separation unit 190 performs BF separation on the container 131 into which a liquid has been dispensed. The BF separation unit 190 includes one or more processing ports in which the containers 131 can be respectively installed. The processing port includes a magnetic force source 192 (see FIG. 14) configured to collect magnetic particles contained in the R2 reagent, and a cleaner 191 (see FIG. 14) configured to suction a liquid phase and supply a cleaning liquid. The BF separation unit 190 suctions the liquid phase in the container 131 and supplies the cleaning liquid by the cleaner 191 in a state where the magnetic particles on which an immune complex, which will be described later, has been formed are magnetized. The cleaner 191 includes a liquid phase suction passage and a cleaning liquid discharge passage, and is connected to a fluid circuit (not illustrated). Accordingly, an unnecessary component contained in the liquid phase can be separated and removed from a conjugate of the immune complex and the magnetic particles.

The measurement unit 10 includes a photodetector 10a such as a photomultiplier tube (see FIG. 14). The measurement unit 10 acquires light, generated in the course of a reaction between a labeled antibody, which is bound to an antigen of a specimen that has been subjected to various processes, and a luminescent substrate by the photodetector 10a, thereby measuring the amount of antigen contained in the specimen. The measurement unit 10 measures the specimen heated by the heating unit 150. The measurement unit 10 measures the specimen on which the BF separation process has been performed by the BF separation unit 190.

The control unit 11 includes a processor such as a CPU and a storage unit such as a ROM, a RAM, and a hard disk. The processor functions as a control unit of the specimen measurement device 100 by executing a control program stored in the storage unit. The control unit 11 controls the operations of the respective units of the specimen measurement device 100 described above. The control unit 11 analyzes a result detected by the measurement unit 10.

The dispensing unit 20a includes the dispenser 20b and the dispenser 20c. The dispenser 20b is configured to suction and discharge a specimen. The dispenser 20c is configured to suction and discharge a reagent. The dispenser 20c is configured to suction and discharge a plurality of types of reagents. Specifically, the dispenser 20c is configured to suction and discharge the R1, R2, and R3 reagents.

The dispensing unit 20a holds the dispenser 20b on a first side (X2 direction side) in the X direction, and holds the dispenser 20c on a second side (X1 direction side) opposite to the first side in the X direction. The dispenser 20b suctions the specimen from the specimen container 129 that stores the specimen transported by the transport unit 125. The dispenser 20c suctions the reagent from the reagent container 160a installed in the reagent storage 160.

The dispenser 20b and the dispenser 20c are disposed in the horizontal direction along the movement direction. Specifically, the dispenser 20b and the dispenser 20c are disposed along the X direction. The dispenser 20b is disposed on the rear side (X2 direction side) with respect to the dispenser 20c. The dispenser 20b and the dispenser 20c can move in a linear movable range 23. The movable range 23 includes a dispensable area of the dispenser 20b and the dispenser 20c, and an area for a retreat to a position that does not interfere with the container transport unit 140.

The nozzles of the dispenser 20b and the dispenser 20c that have performed suction dispense the suctioned liquids into the container 131. The dispenser 20c dispenses the reagent contained in the reagent container 160a.

In the movable range 23 of the dispenser 20b and the dispenser 20c, the reagent supply units 161a and 161b, the spotting unit 180, the cleaner 171, and the specimen supply unit 126 are linearly disposed in this order in a plan view as a suction position or a discharge position of the dispenser 20b. That is, the specimen supply unit 126, the cleaner 171, and the reagent supply units 161a and 161b are linearly disposed in the order of the specimen supply unit 126, the cleaner 171, and the reagent supply units 161a and 161b in a plan view. The specimen supply unit 126, the cleaner 171, the spotting unit 180, and the reagent supply units 161a and 161b are linearly disposed in the order of the specimen supply unit 126, the cleaner 171, the spotting unit 180, and the reagent supply units 161a and 161b in a plan view.

The dispenser 20b and the dispenser 20c are connected to a quantitative syringe 24, and suction and discharge a predetermined amount of a specimen or a reagent. The dispenser 20b is connected to a liquid level sensor 20d (see FIG. 4). The dispenser 20c is connected to a liquid level sensor 20e (see FIG. 4). The liquid level sensor 20d is connected to the control unit 11, and detects a liquid level of a reagent based on a change in capacitance due to the contact between the a liquid level of a specimen and the dispenser 20b and outputs a detection result to the control unit 11 when suctioning the specimen from the specimen container 129. The liquid level sensor 20e is connected to the control unit 11, and detects a liquid level of a reagent based on a change in capacitance due to the contact between the a liquid level of a sample and the dispenser 20c and outputs a detection result to the control unit 11 when suctioning the sample from the sample container 160a.

As illustrated in FIG. 4, the moving unit 30 moves the dispensing unit 20a in the direction in which the dispensers 20b and 20c are arranged. That is, the moving unit 30 moves the dispensing unit 20a in the X direction of the horizontal direction. Specifically, the moving unit 30 is configured to integrally move the dispenser 20b and the dispenser 20c in one axial direction (X direction) of the horizontal direction.

The moving unit 30 includes a support unit 31, a rail 32, a moving unit 33, a motor 34, and a belt mechanism 35. The support unit 31 movably supports the dispenser 20b and the dispenser 20c. The support unit 31 is provided commonly to the dispenser 20b and the dispenser 20c. The dispenser 20b and the dispenser 20c may be separately supported. The dispenser 20b and the dispenser 20c may be independently moved in one axis direction.

The support unit 31 is formed in a plate shape extending along the XZ plane. The support unit 31 is formed in an elongated shape extending along the X direction. Both the dispenser 20b and the dispenser 20c are disposed on one plate-like side surface (Y1 side surface) of the support unit 31. The support unit 31 is provided with the rail 32 extending in the X direction. The moving unit 33 is engaged with the rail 32. The moving unit 33 is supported by the rail 32 to be movable in the X direction. That is, the moving unit 33 moves along the support unit 31. The dispenser 20b and the dispenser 20c are attached to the common moving unit 33. The moving unit 33 is, for example, a slider that moves along the guide of the support unit 31.

The motor 34 is configured to drive the belt mechanism 35. The motor 34 is provided with an encoder, and a signal is transmitted from the encoder to the control unit 11. The motor 34 is controlled and driven by the control unit 11 based on the signal of the encoder. The belt mechanism 35 includes a belt and a pulley, and is connected to the dispensing unit 20a including the dispenser 20b and the dispenser 20c. The movement of the belt of the belt mechanism 35 moves the connected dispensing unit 20a in the X direction.

The drive unit 40 moves the dispenser 20b and the dispenser 20c in the up-down direction independently of each other. The drive unit 40 includes a motor 41, a belt mechanism 42, a motor 43, and a belt mechanism 44. When dispensing is performed by the dispenser 20, the drive unit 40 moves the dispenser 20 close to the bottom surface 131a of the container 131 such that the dispenser 20 abuts on the bottom surface 131a of the container 131.

The motor 41 and the belt mechanism 42 move the dispenser 20c in the up-down direction. The motor 41 and the belt mechanism 42 are moved in one axial direction (X direction) together with the dispenser 20c. The motor 41 is configured to drive the belt mechanism 42. The motor 41 is provided with an encoder, and a signal is transmitted from the encoder to the control unit 11. The motor 41 is controlled and driven by the control unit 11 based on the signal of the encoder. The belt mechanism 42 includes a belt and a pulley, and is connected to the dispenser 20c. The movement of the belt of the belt mechanism 42 moves the connected dispenser 20c in the up-down direction (Z direction).

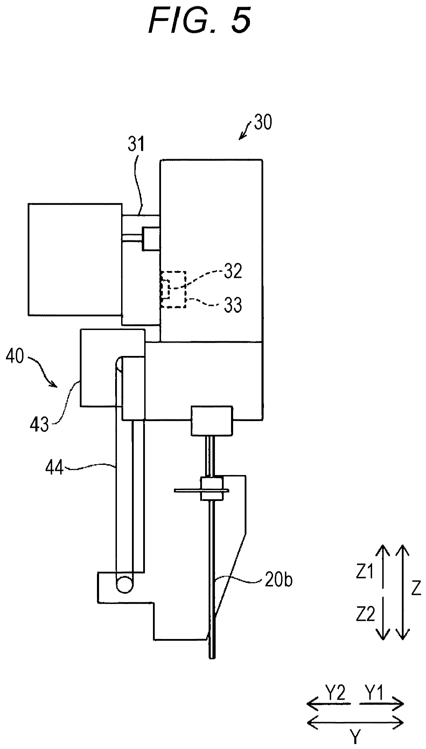

As illustrated in FIG. 5, the motor 43 and the belt mechanism 44 move the dispenser 20b in the up-down direction. The motor 43 and the belt mechanism 44 are moved in one axial direction (X direction) together with the dispenser 20b. The motor 43 is configured to drive the belt mechanism 44. The motor 43 is provided with an encoder, and a signal is transmitted from the encoder to the control unit 11. The motor 43 is controlled and driven by the control unit 11 based on the signal of the encoder. The belt mechanism 44 includes a belt and a pulley, and is connected to the dispenser 20b. The movement of the belt of the belt mechanism 44 moves the connected dispenser 20b in the up-down direction (Z direction).

The control unit 11 controls the dispensing unit 20a and the moving unit 30 such that the dispensing is performed on another container 131 while one container is measured by the measurement unit 10. Accordingly, the processing of another specimen can be performed in parallel with the measurement of one specimen by the measurement unit 10, and thus, the process of measuring the specimen can be performed efficiently. The control unit 11 controls the dispensing unit 20a and the moving unit 30 such that dispensing is performed on another container 131 while the container 131 to which a liquid has been dispensed is heated by the heating unit 150. Accordingly, the processing of another specimen can be performed in parallel with the heating of one specimen by the heating unit 150, and thus, the process of measuring the specimen can be performed efficiently.

The control unit 11 controls the dispensing unit 20a and the moving unit 30 such that dispensing is performed on another container 131 while the BF separation unit 190 performs the BF separation process on the container 131 into which a liquid has been dispensed. Accordingly, the processing of another specimen can be performed in parallel with the BF separation process of one specimen by the BF separation unit 190, and thus, the process of measuring the specimen can be performed efficiently.

### (Dispensing of Specimen)

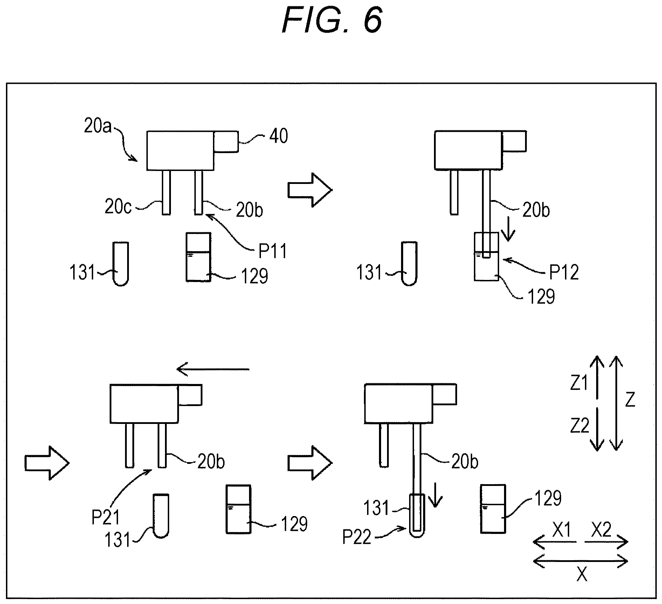

The dispensing of a specimen by the dispensing unit 20a will be described with reference to FIG. 6.

The dispenser 20b of the dispensing unit 20a is configured to be moved to a first position P11, and then, moved from the first position P11 to a specimen suction position P12 when suctioning a specimen. Specifically, the dispenser 20b is horizontally moved by the moving unit 30 to the first position P11 located above the specimen suction position P12. Then, the dispenser 20b is moved by the drive unit 40 from the first position P11 to the specimen suction position P12. Then, the specimen is suctioned from the specimen container 129 by the dispenser 20b.

The dispenser 20b of the dispensing unit 20a is configured to be moved to a second position P21 and then, moved from the second position P21 to a specimen discharge position P22 when discharging the suctioned specimen. Specifically, the dispenser 20b is horizontally moved by the moving unit 30 to the second position P21 located above the specimen discharge position P22. Then, the dispenser 20b is moved by the drive unit 40 from the second position P21 to the specimen discharge position P22. Then, the specimen is discharged into the container 131 by the dispenser 20b. Accordingly, the specimen is dispensed.

### (Dispensing of Reagent)

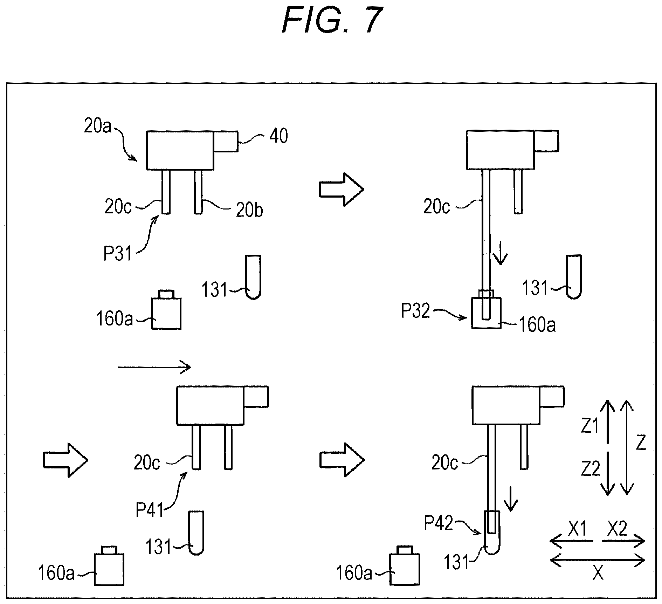

The dispensing of a reagent by the dispensing unit 20a will be described with reference to FIG. 7.

The dispenser 20c of the dispensing unit 20a is configured to be moved from a third position P31, and then, moved from the third position P31 to a reagent suction position P32 when suctioning a reagent. Specifically, the dispenser 20c is horizontally moved by the moving unit 30 to the third position P31 located above the reagent suction position P32. Then, the dispenser 20c is moved by the drive unit 40 from the third position P31 to the reagent suction position P32. Then, the reagent is suctioned from the reagent container 160a by the dispenser 20c.

The dispenser 20c of the dispensing unit 20a is configured to be moved to a fourth position P41, and then, moved from the fourth position P41 to a reagent discharge position P42 when discharging the suctioned reagent. Specifically, the dispenser 20c is horizontally moved by the moving unit 30 to the fourth position P41 located above the reagent discharge position P42. Then, the dispenser 20c is moved by the drive unit 40 from the fourth position P41 to the reagent discharge position P42. Then, the reagent is discharged into the container 131 by the dispenser 20c. Accordingly, the reagent is dispensed.

### (High-Pressure Cleaning)

As illustrated in FIG. 8, the inside of a nozzle is cleaned by the cleaning unit 170 with a high-pressure cleaning liquid. Specifically, the cleaning liquid stored in the cleaning liquid container 173 is sent to the nozzle via the quantitative syringe 24 by being applied with the pressure by the high-pressure cleaning syringe 175 of the high-pressure unit 172. As a result, the cleaning liquid flowing in the nozzle is in a turbulent state, and the inside of the nozzle can be effectively cleaned. The Reynolds number of the cleaning liquid flowing in the nozzle is, for example, 4000 or more.

### (Distal End Shape of Nozzle)

As illustrated in FIGS. 9A and 9B, the dispenser 20b is formed so as to have an inclined distal end portion. FIG. 9A is a view of the distal end portion of the dispenser 20b as viewed from the Y direction, and FIG. 9B is a view of the distal end portion of the dispenser 20b as viewed from the X direction. The nozzle 21 has an inclined surface 21c at the distal end on the discharge port side. Accordingly, when discharging a specimen by pressing the dispenser 20b against a container into which the specimen is to be discharged, a gap can be provided between the inclined distal end portion and the pressed portion, and thus, it is possible to prevent the distal end portion from being closed. As a result, the specimen can be reliably discharged. In the example illustrated in FIGS. 9A and 9B, the dispenser 20b is provided with inclined surfaces 21c at two opposing sites in the distal end portion. The distal end portion of the dispenser 20b may have one inclined surface 21c, or may have three or more inclined surfaces 21c.

The dispenser 20b dispenses a small amount of a specimen. That is, the specimen is used by the upstream blood coagulation measurement device 200, and thus, the amount of the specimen is reduced in the downstream specimen measurement device 100. Therefore, measurement is performed by dispensing the small amount of the specimen in the specimen measurement device 100. The dispenser 20b dispenses, for example, the specimen of about 2 µL to 30 µL.

In the present embodiment, the nozzle 21 is covered by the hydrophobic coating 22 in the area 21a on the distal end side. In the nozzle 21, a distal end surface 21b on a discharge port side is exposed from a hydrophobic coating 22. Accordingly, the hydrophobic coating 22 is not formed on the distal end surface 21b on the discharge port side of the dispenser 20b that is likely to come into contact with the container 131, and thus, the hydrophobic coating 22 can be prevented from being peeled off from the nozzle 21 even if the container 131 and the dispenser 20 come into contact with each other. As a result, it is possible to prevent peeled pieces of the hydrophobic coating 22 from being mixed into the specimen so that the measurement of the specimen can be performed with high accuracy.

The outer peripheral surface 21d of the nozzle 21, which is near the distal end surface 21b and connected to the distal end surface 21b, is exposed from the hydrophobic coating 22 in addition to the distal end surface 21b on the discharge port side. Accordingly, the hydrophobic coating 22 is not formed on the outer peripheral surface 21d, which is near the distal end surface 21b and connected to the distal end surface 21b on the discharge port side of the dispenser 20b. Thus, when the container 131 adjacent to the dispenser 20b has a curved surface, the hydrophobic coating 22 can be prevented from being peeled off from the nozzle 21 even if the side surface near the distal end surface 21b of the dispenser 20b comes into contact with the curved surface of the container 131.

In the nozzle 21, the inclined surface 21c connected to the distal end surface 21b is also exposed from the hydrophobic coating 22 in addition to the distal end surface 21b on the discharge port side. Accordingly, when the container 131 adjacent to the dispenser 20b has a curved surface, the hydrophobic coating 22 can be prevented from being peeled off from the nozzle 21 even if the inclined surface 21c near the distal end surface 21b of the dispenser 20b comes into contact with the curved surface of the container 131 since the hydrophobic coating 22 is not formed on the inclined surface 21c at the distal end of the dispenser 20b on the discharge port side.

In other words, in the dispenser 20b of the example illustrated in FIGS. 9A and 9B, the outer peripheral surface 21d of the nozzle 21 near the distal end surface 21b connected to the inclined surface 21c is exposed from the hydrophobic coating 22 in addition to the distal end surface 21b and the inclined surface 21c on the discharge port side.

The nozzle 21 has the function of detecting the liquid level of the specimen. Accordingly, the distal end surface 21b of the nozzle 21 detecting the liquid level is exposed from the hydrophobic coating 22, and thus, it is possible to prevent a decrease in the liquid level detection sensitivity, which is different from the case where the distal end surface 21b of the nozzle 21 is covered by the hydrophobic coating 22.

In the dispenser 20b, the nozzle 21 may be exposed from the hydrophobic coating 22 from the distal end surface 21b on the discharge port side to the inclined surface 21c connected to the distal end surface 21b, as illustrated in the example in FIGS. 10A and 10B.

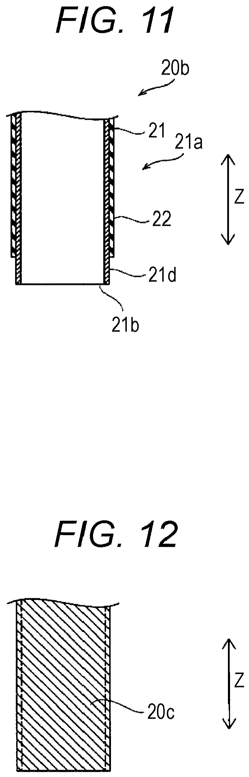

In the dispenser 20b, the nozzle 21 is not necessarily provided with the inclined surface as in the example illustrated in FIG. 11. In this case, the outer peripheral surface 21d of the nozzle 21, which is near the distal end surface 21b and connected to the distal end surface 21b, may be exposed from the hydrophobic coating 22 in addition to the distal end surface 21b on the discharge port side.

As illustrated in FIG. 12, the outer surface of the dispenser 20c is subjected to a water-repellent treatment. Accordingly, a reagent can be prevented from adhering to the outer surface of the dispenser 20c, and thus, the reagent can be prevented from dripping from the outer surface. It is possible to prevent mixing of different types of reagents. A base material of the dispenser 20c includes a metal material. For example, the base material of the dispenser 20c includes stainless steel. The dispenser 20c has, for example, the outer surface coated with Teflon (registered trademark). The dispenser 20c may be subjected to a water-repellent treatment other than Teflon. The dispenser 20c that dispenses a reagent is not necessarily subjected to the water-repellent treatment.

### (Spotting Process)

As illustrated in FIG. 13, a specimen is transferred to the container 131 by spotting. Since the specimen is transferred by spotting, a small amount of the specimen can be dispensed into the container 131. That is, the dispenser 20b dispenses the specimen to the container 131 by spotting. First, bottoming is performed to cause the dispenser 20b to abut on the bottom surface 131a of the container 131. At this time, the spotting unit 180 moves downward, and a pressing force of the container 131 by the dispenser 20b is absorbed. Then, the specimen is discharged from the dispenser 20b. At this time, the specimen abuts on the bottom surface 131a of the container 131, and thus, the specimen is adsorbed on the bottom surface 131a of the container 131 due to the surface tension of the specimen. Thereafter, the dispenser 20b is raised, and the discharge is completed. By performing the spotting process, a small amount of the specimen can be stably discharged. The dispenser 20c may dispense a reagent by spotting.

### (Summary of Immunoassay)

In the configuration examples illustrated in FIGS. 2 to 13, the immunoassay is performed using the R1 reagent to the R5 reagent as described above. An example in which a test substance 81 is a hepatitis B surface antigen (HBsAg) will be described as an example of the immunoassay with reference to FIG. 14.

First, a specimen containing the test substance 81 and the R1 reagent are dispensed into the container 131. The specimen is dispensed into the container 131 by the dispenser 20b. The R1 reagent is dispensed into the container 131 by the dispenser 20c. The R1 reagent contains a capture substance 84 and reacts with and is bound to the test substance 81. The capture substance 84 includes a binding substance configured to bind the capture substance 84 to a solid phase carrier 82 included in the R2 reagent.

For the binding between the binding substance and a solid phase carrier, for example, combinations of biotin and avidins, hapten and an anti-hapten antibody, nickel and histidine tag, glutathione and glutathione-S-transferase and the like can be used. "Avidins" means to include avidin and streptavidin.

For example, the capture substance 84 is an antibody modified with biotin (biotin antibody). That is, the capture substance 84 is modified with biotin as the binding substance. After dispensing the specimen and the R1 reagent, a sample in the container 131 is heated to a predetermined temperature by the heating unit 150, so that the capture substance 84 and the test substance 81 are bound.

Next, the R2 reagent is dispensed into the container 131 by the dispenser 20c. The R2 reagent contains the solid phase carrier 82. The solid phase carrier 82 is bound to the binding substance of the capture substance 84. The solid phase carrier 82 is, for example, magnetic particles (StAvi-bound magnetic particles) on which streptavidin that is bound to biotin is immobilized. Streptavidin of the StAvi-bound magnetic particles reacts with and is bound to biotin as the binding substance. After dispensing the R2 reagent, the heating unit 150 heats the sample in the container 131 to a predetermined temperature. As a result, the test substance 81 and the capture substance 84 are bound to the solid phase carrier 82.

The test substance 81 and the capture substance 84 formed on the solid phase carrier 82 and an unreacted capture substance 84 are separated by a primary BF separation process performed by the BF separation unit 190. When the container 131 is set in the processing port of the BF separation unit 190, the BF separation unit 190 executes the respective steps of suctioning the liquid phase using the cleaner 191 in a magnetized state by a magnetic force source 192, discharging the cleaning liquid, and stirring in a non-magnetizing state one or a plurality of times. An unnecessary component, such as the unreacted capture substance 84, is removed from the container 131 by the primary BF separation process. In the first BF separation process, the processing proceeds to the next step in a state where the liquid phase in the container 131 is finally suctioned.

Next, the R3 reagent is dispensed into the container 131 by the dispenser 20c. The R3 reagent contains a labeling substance 83, and reacts with and is bound to the test substance 81. After dispensing the R3 reagent, the sample in the container 131 is heated to a predetermined temperature in the heating unit 150. As a result, an immune complex 85 containing the test substance 81, the labeling substance 83, and the capture substance 84 is formed on the solid phase carrier 82. In the example in FIG. 14, the labeling substance 83 is an ALP (alkaline phosphatase) labeled antibody.

The immune complex 85 formed on the solid phase carrier 82 and the unreacted labeling substance 83 are separated by a secondary BF separation process. The BF separation unit 190 executes the respective steps of suctioning the liquid phase in the magnetized state by the magnetic force source 192, discharging the cleaning liquid, and stirring in the non-magnetized state one or a plurality of times. An unnecessary component, such as the unreacted labeling substance 83, is removed from the container 131 by the secondary BF separation process. In the secondary BF separation process, the processing proceeds to the next step in a state where the liquid phase in the container 131 is finally suctioned.

Thereafter, the R4 reagent and the R5 reagent are dispensed into the container 131 by the R4 reagent dispenser 163a and the R5 reagent dispenser 163b, respectively. The R4 reagent contains a buffer solution. The immune complex 85 bound to the solid phase carrier 82 is dispersed in the buffer solution. The R5 reagent contains a chemiluminescent substrate. The buffer solution contained in the R4 reagent has a composition that promotes the reaction between a label (enzyme) of the labeling substance 83 contained in the immune complex 85 and a substrate. After dispensing the R4 and R5 reagents, the heating unit 150 heats the sample in the container 131 to a predetermined temperature. The substrate reacts with the label to generate light, and the intensity of the generated light is measured by the photodetector 10a of the measurement unit 10. A content of the test substance 81 in the specimen or the like is measured based on a detection signal of the measurement unit 10.

### (Description of Measurement Processing Operation)

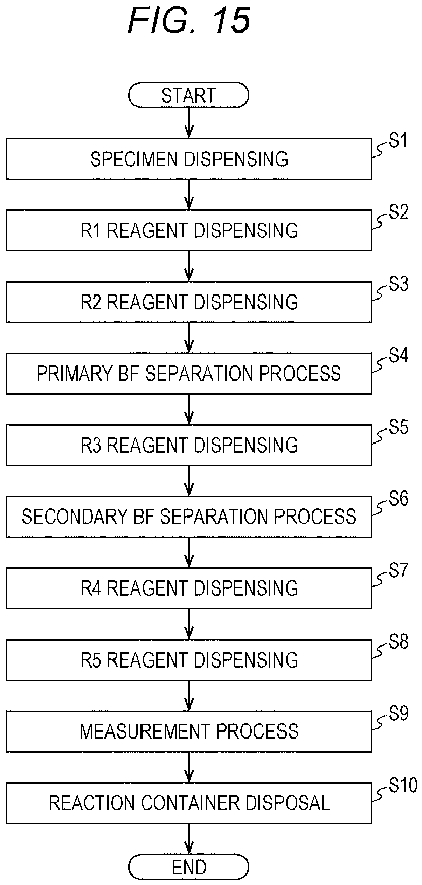

Next, a measurement processing operation of the specimen measurement device 100 illustrated in FIG. 14 will be described using FIG. 15. The processing of each step illustrated in FIG. 15 is controlled by the control unit 11 of the specimen measurement device 100.

In Step S1, a specimen is dispensed into the container 131. Specifically, the specimen is suctioned from a test tube of the specimen supply unit 126 of the specimen transport unit 120 by the dispenser 20b. Then, the specimen suctioned by the dispenser 20b is dispensed into the container 131. After dispensing, the dispenser 20b is cleaned by the cleaner 171 using a cleaning liquid. The dispenser 20b is cleaned by the cleaner 171 each time the dispensing operation is performed.

In Step S2, the R1 reagent is dispensed into the container 131 by the dispenser 20c. Specifically, the R1 reagent is suctioned from the reagent container 160a held in the reagent storage 160 by the dispenser 20c. Then, the R1 reagent suctioned by the dispenser 20c is dispensed into the container 131. After dispensing, the dispenser 20c is cleaned by the cleaner 171 using a cleaning liquid. The dispenser 20c is cleaned by the cleaner 171 each time the dispensing operation is performed.

In Step S3, the R2 reagent is dispensed into the container 131 by the dispenser 20c. After dispensing the R2 reagent, the container 131 is transferred to the heating unit 150 by the container transport unit 140. The container 131 is heated by the heating unit 150 for a predetermined time.

In Step S4, the primary BF separation process is performed by the BF separation unit 190. Specifically, the container 131 is transferred to the BF separation unit 190 by the container transport unit 140. The BF separation unit 190 performs the primary BF separation process (see FIG. 14) on a sample in the container 131 to remove a liquid component.

In Step S5, the container 131 is transferred to the R3 reagent discharge position by the container transport unit 140. Then, the R3 reagent is dispensed into the container 131 by the dispenser 20c. After dispensing the R3 reagent, the container 131 is transferred to the heating unit 150 by the container transport unit 140. The container 131 is heated by the heating unit 150 for a predetermined time.

In Step S6, the BF separation unit 190 performs the secondary BF separation process. Specifically, the container 131 is transferred to the BF separation unit 190 by the container transport unit 140. The BF separation unit 190 performs the secondary BF separation process (see FIG. 14) on the sample in the container 131 to remove a liquid component.

In Step S7, the R4 reagent is dispensed into the container 131. Specifically, the container 131 is transferred to the R4 reagent discharge position by the container transport unit 140. The R4 reagent is dispensed into the container 131 by the R4 reagent dispenser 163a.

In Step S8, the R5 reagent is dispensed into the container 131. Specifically, the container 131 is transferred to the R5 reagent discharge position by the container transport unit 140. The R5 reagent is dispensed into the container 131 by the R5 reagent dispenser 163b. After dispensing the R5 reagent, the container 131 is transferred to the heating unit 150 by the container transport unit 140. The container 131 is heated by the heating unit 150 for a predetermined time.

In Step S9, the process of detecting the immune complex 85 is performed. Specifically, the container 131 is transferred to the measurement unit 10 by the container transport unit 140. The measurement unit 10 measures the intensity of light generated by the reaction between the substrate and the label. A detection result of the measurement unit 10 is output to the control unit 11.

After the detection is completed, in Step S10, the transport unit 125 takes out the container 131 that has been subjected to the measurement processing from the measurement unit 10 and discards the container 131 in the disposal port 128.

As described above, the measurement processing operation by the specimen measurement device 100 is performed.

The embodiments disclosed herein need to be considered in all respects as illustrative and not restrictive. A scope of the present disclosure is defined by a scope of the claims, rather than the above description of the embodiments, and further includes all modifications within a scope and meaning equivalent to the scope of the claims.

## Claims

1. A specimen measurement device comprising:
a nozzle having an area on a distal end side being covered by a hydrophobic coating;
a measurement unit that measures a specimen dispensed into a container by the nozzle; and
a drive unit that moves the nozzle so as to abut on a bottom surface of the container,
wherein the nozzle has a distal end surface on a discharge port side being exposed from the hydrophobic coating.

2. The specimen measurement device according to claim 1, wherein
an outer peripheral surface, which is near the distal end surface and connected to the distal end surface, of the nozzle is exposed from the hydrophobic coating.

3. The specimen measurement device according to claim 1 or 2, wherein
the nozzle has an inclined surface at a distal end on the discharge port side, and
the inclined surface is connected to the distal end surface and is exposed from the hydrophobic coating.

4. The specimen measurement device according to claim 3, wherein
an outer peripheral surface, which is near the distal end surface and connected to the inclined surface, of the nozzle is exposed from the hydrophobic coating.

5. The specimen measurement device according to any one of claims 1 to 4, wherein
the nozzle dispenses the specimen into the container by spotting.

6. The specimen measurement device according to claim 5, further comprising
a spotting unit that holds the container, to which the specimen is dispensed, to be movable in an up-down direction, and causes the specimen to spot by the nozzle.

7. The specimen measurement device according to any one of claims 1 to 6, wherein
the nozzle has a function of detecting a liquid level of the specimen.

8. The specimen measurement device according to any one of claims 1 to 7, wherein
the nozzle is formed using metal, and
the hydrophobic coating includes a silicon-based material or a fluorine-based material.

9. The specimen measurement device according to any one of claims 1 to 8, further comprising
a cleaner that cleans the nozzle each time the specimen is suctioned.

10. A specimen measurement method comprising:
dispensing a specimen into a container using a nozzle having an area on a distal end side being covered by a hydrophobic coating and a distal end surface on a discharge port side being exposed from the hydrophobic coating; and
measuring the specimen dispensed into the container by the nozzle,
wherein the dispensing comprises causing the nozzle to abut on a bottom surface of the container.

11. The specimen measurement method according to claim 10, wherein
the dispensing comprises dispensing the specimen into the container by spotting.

12. The specimen measurement method according to claim 11, wherein
the dispensing comprises holding the container, in which the specimen is dispensed, to be movable in an up-down direction, and dispensing the specimen while bringing the nozzle into contact with the bottom surface of the container.

13. The specimen measurement method according to any one of claims 10 to 12, wherein
the nozzle is formed using metal, and
the hydrophobic coating includes a silicon-based material or a fluorine-based material.

14. The specimen measurement method according to any one of claims 10 to 13, further comprising
detecting a liquid level of the specimen using the nozzle.

15. A nozzle for dispensing a specimen, wherein
an area on a distal end side is covered by a hydrophobic coating, and
the nozzle is configured to dispense a specimen while abutting on a bottom surface of a container and have a distal end surface on a discharge port side being exposed from the hydrophobic coating.
